Europäisches Patentamt

(19) European Patent Office

Office européen des brevets

(11) Publication number: **0 143 693**
A2

(12) # EUROPEAN PATENT APPLICATION

(21) Application number: **84402317.6**

(22) Date of filing: **14.11.84**

(51) Int. Cl.⁴: **H 02 K 1/28,** H 02 K 15/02, H 02 K 21/08

(30) Priority: **18.11.83 US 553085**

(43) Date of publication of application: **05.06.85** Bulletin 85/23

(84) Designated Contracting States: **DE FR GB IT**

(71) Applicant: **FRANKLIN ELECTRIC Co., Inc., 400 East Spring Street, Bluffton Indiana 46714 (US)**

(72) Inventor: **Schaefer, Edward J., Fackler Road, Bluffton Indiana 46714 (US)**

(74) Representative: **Bonnetat, Christian et al, Cabinet PROPI Conseils 23 rue de Léningrad, F-75008 Paris (FR)**

(54) **Rotor for electric motor.**

㉗ This disclosure relates to a rotor for a permanent magnet electric motor, including a stack of rotor laminations, the stack being generally cylindrical and adapted to be secured to a rotor shaft. A plurality of arcuate permanent magnets are positioned on the peripheral surface of the stack, the magnets being circumferentially spaced to form gaps between the adjacent side edges of the magnets. Interconnecting anchors between the laminations and the side edges are provided to secure the magnets to the stack of laminations.

The rotor is made by utilizing parts that are normally discarded during the construction of the motor stator. The stator includes a stack of stator laminations, each lamination having the centerpiece thereof removed by a stamping operation for the rotor cavity. The removed centerpieces, which are normally discarded, have the rotor laminations stamped from it. After the latter stamping operation, the rotor laminations are stacked, secured to permanent magnets and mounted on a rotor shaft.

ROTOR FOR ELECTRIC MOTOR.

This invention relates to the construction of an electric motor, and more particularly to a motor having a permanent magnet rotor.

Permanent magnet electric motors are well known and various types have been on the market for many years. Such motors have a rotor including a number of circumferentially spaced permanent magnets which form salient poles, and an armature that sets up a rotating magnetic field which turns the rotor. The permanent magnets are usually secured by an adhesive to the outer surface of a steel rotor sleeve. U.S. patent No. 4,405,873 shows another type of rotor wherein permanent magnets are situated in slots formed in a cylindrical steel matrix.

There is a need in the industry for an economically constructed permanent magnet rotor wherein the permanent magnets are securely held in place.

It is therefore a general object of the present invention to provide an improved and inexpensive permanent magnet rotor construction and a method of making such a rotor.

A rotor in accordance with this invention comprises a stack of laminations, the stack being generally cylindrical and adapted to be secured to a rotor shaft. A plurality of arcuate permanent magnets are positioned on the peripheral surface of the stack, the magnets being circumferentially spaced to form gaps between the adjacent side edges of the magnets. Anchor means between the laminations and the side edges are provided to secure the magnets to the stack of laminations.

The rotor is made by utilizing parts that are normally discarded during the construction of the motor stator. The stator includes a stack of stator laminations, each lamination having the center area thereof removed to form a rotor cavity. The removed center areas or pieces, which are normally discarded, have the rotor laminations stamped from them. After the latter stamping operation, the rotor laminations are stacked, secured to permanent magnets and mounted on a rotor shaft.

The invention will be better understood from the following detailed description taken in conjunction with the accompanying figures of the drawings, wherein:

Fig. 1 is an end view of a stack of stator laminations;

Fig. 2 is a view of a centerpiece from a stator lamination and showing a rotor lamination;

Fig. 3 is a view partially in section showing an end of a rotor;

Fig. 4 is a perspective view of a rotor in accordance with a preferred form of the invention;

Figs. 5 and 6 are fragmentary enlarged views showing an alternate construction of the rotor;

Figs. 7-10 are views similar to Fig. 5 but showing still additional forms of the invention;

Fig. 11 is a side elevational view of another alternate form of the invention;

Fig. 12 is a sectional view taken on the line 12-12 of Fig. 11;

Fig. 13 is an end view of the structure shown in Fig. 11;

Figs. 14 and 15 are views similar to Figs. 11 and 13 but showing still another form of the invention; and

Fig. 16 is an end view of a rotor in accordance with still another form of the invention.

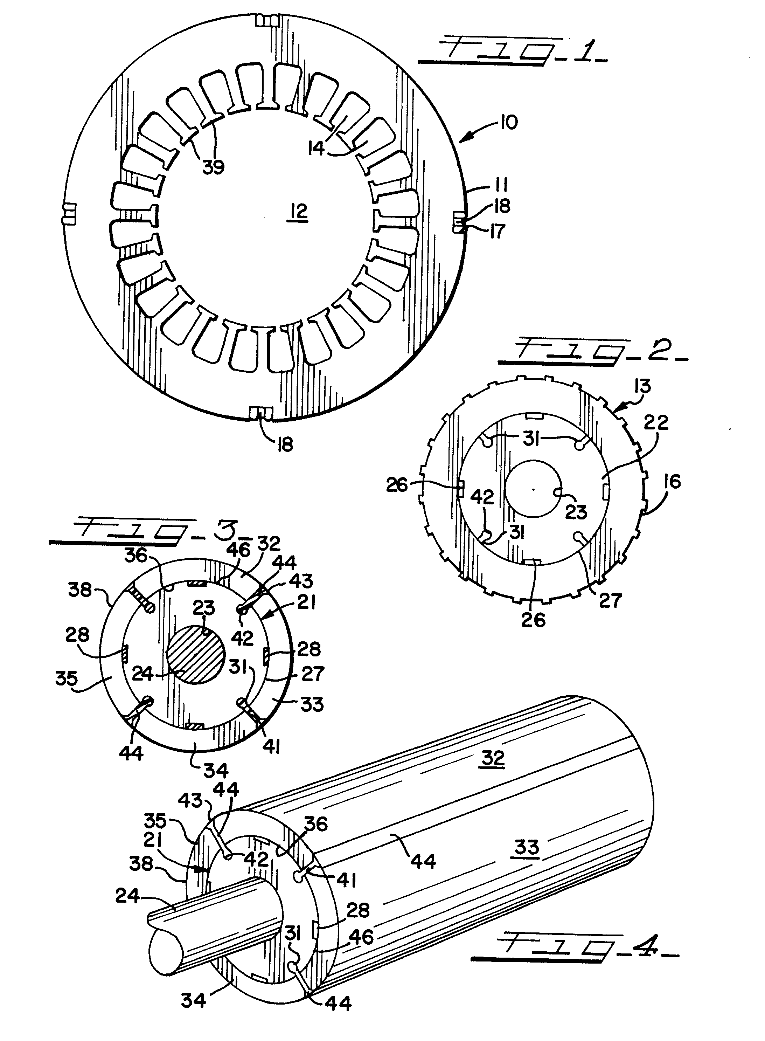

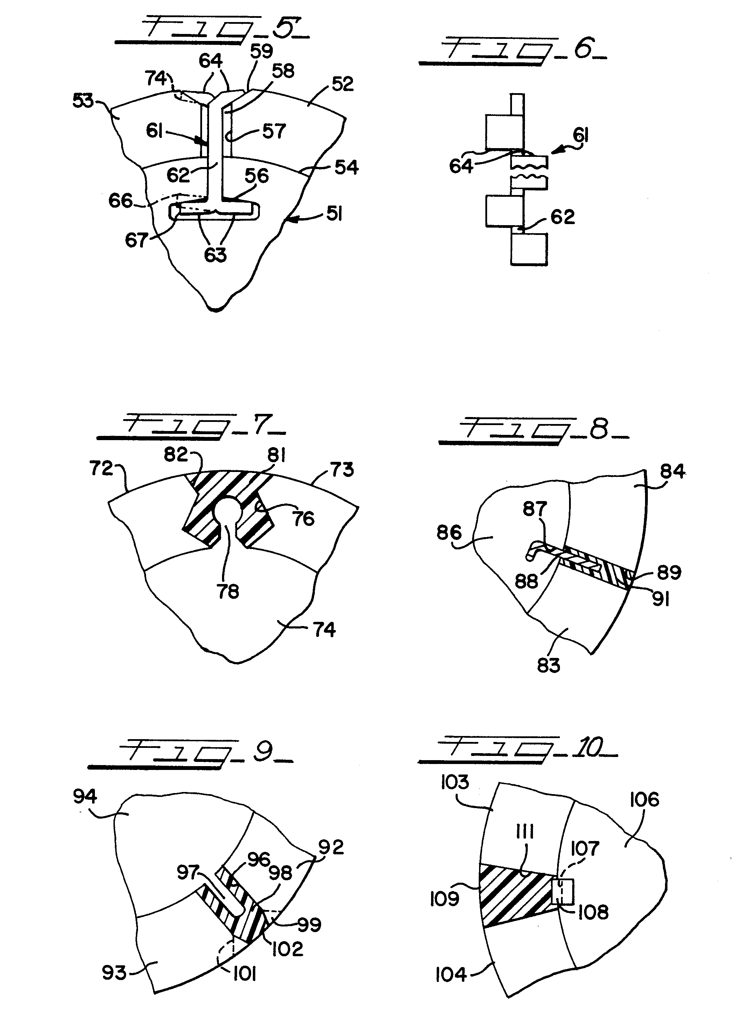

The stack 10 of stator laminations shown in Fig. 1 is similar to the construction described in E.J. Schaefer U.S. patent No. 2,849,695, dated August 26, 1958. Each stator lamination is shaped, as by a series of stamping or punching operations, to form a generally circular outer periphery 11 and a rotor cavity 12. The stamping is such that stator pole slots 14 are formed around the inner periphery of the stator lamination, which receive stator windings (not shown). In one method of making the laminations 10, one stamping operation forms the stator slots 14 and another stamping operation removes a centerpiece 13, shown in Fig. 2, and thereby forms the rotor cavity 12. To secure the stator laminations together in a stack, the outer periphery 11 of the stator laminations has a slot or notch 17 formed therein and bands or strips 18 of metal are placed in the gaps and deformed, as described in the above Schaefer patent.

In the construction of a conventional permanent magnet electric motor, it is common practice to discard or scrap the centerpieces 13 after the formation of the stator laminations. It is an important feature of the present invention that the centerpieces 13 are utilized to form a stack or core 21 of rotor laminations to which permanent magnet pole pieces are secured as will be described.

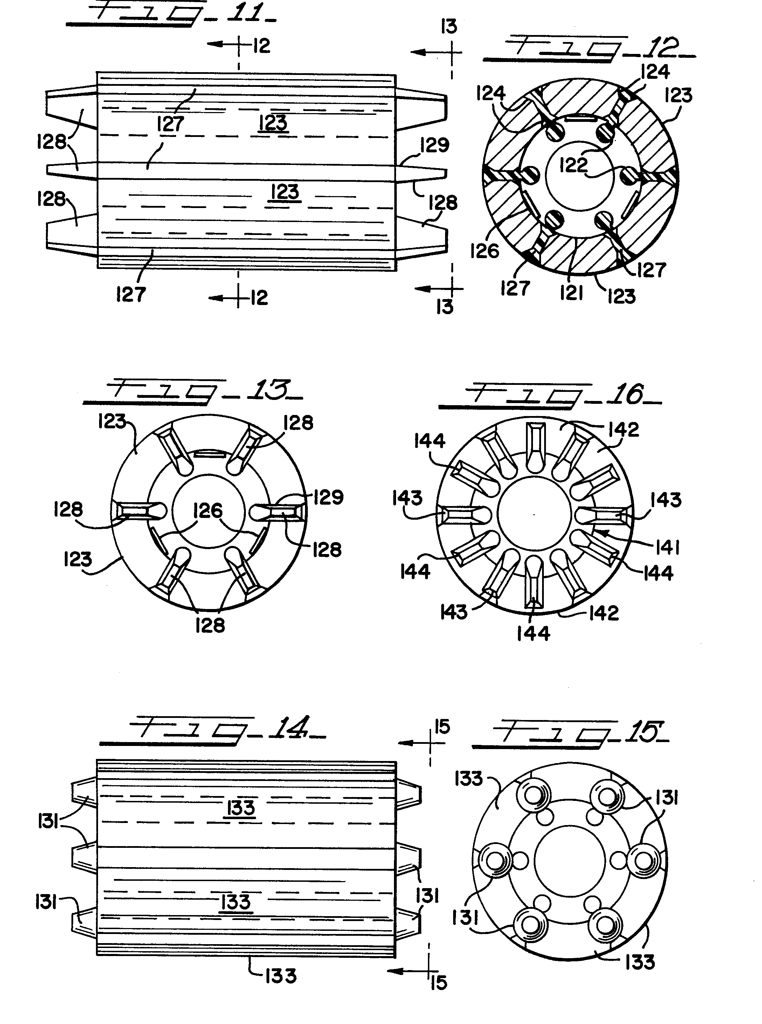

With reference to Figs. 2, 3 and 4, the rotor is formed by stamping from each centerpiece 13 a rotor lamination 22. As shown in Fig. 2, the centerpieces 13 have easily sufficient material inwardly from its outer edge 16 in which to form the rotor laminations. The rotor laminations 22 may also be formed by a stamping or punching operation, and this stamping operation may be performed before or after the operation that removes the centerpiece 13 from the stator lamination. The forming of each rotor lamination includes the provision of a center hole 23 that receives a rotor shaft 24 (Figs. 3 and 4), and the hole and the shaft may be sized so that the parts are secured together by a press fit. The rotor laminations 22 are also secured together to form the rotor stack 21, and this may be accomplished by the use of banding strips and/or the anchors (to be described) which secure the permanent magnets. In the form of the invention shown in Figs. 2-4, banding strips are used, and a plurality of notches 26 are formed in the outer edge 27 of each lamination 22. The laminations 22 are secured together to form the stack 21 by aligning the notches 26 and pressing banding strips 28 along the length of the notches 26, similar to the method of securing the stator laminations as shown in the above-mentioned Schaefer patent. In the arrangements shown, four notches 26 and strips 28 are provided at 90° angular intervals, but, of course, more or fewer notches and strips may be provided. As mentioned above, it is part of this invention that the notches and strips may be eliminated entirely and the rotor laminations secured together by the anchors for securing the permanent magnets to the rotor stack.

In the spaces between the notches 26 are formed a plurality of slots 31 which form part of the anchors for securing the permanent magnets to the rotor stack. With reference to Figs. 3 and 4, four arcuate permanent magnets 32, 33, 34 and 35 are provided on the outer surface of the rotor stack 21. As best shown in Figs. 3 and 4, the inner surfaces 36 of the magnets conform to the outer surface 27 of the stack 21 and fit tightly against the stack. The outer surfaces 38 of the magnets are also arcuate and are dimensioned so that the outer surface 38 is slightly spaced from the inner surfaces of the stator poles 39 (Fig. 1).

The permanent magnets 32-35 are spaced to form gaps 41 therebetween, and as shown in Figs. 3 and 4, the gaps are located over the slots 31 of the rotor laminations. In the instance where four magnets are provided on a rotor, there are also four gaps 41 and a slot 31 associated with each gap.

The radially inner or bottom end of each slot 31 is enlarged as shown at 42, and the radially outer end of each gap 41 is enlarged as indicated at 43, the latter enlargement being formed by chamfering the outer corners of the magnets so that the gap flares radially outwardly and circumferentially. The anchor means further includes a filling material 44 which extends into and completely fills each of the gaps and slots. Due to the enlargements 42 and 43, the filling material 44 interlocks the side edges of the permanent magnets and firmly secures them to the rotor stack 21. The material 44 further preferably has adhesive qualities so that it adheres to the edges of the magnets.

The filling material 44 may be formed of a nonferrous metal, such as aluminum, which is cast in the slots and gaps, or the filling material may be a structural adhesive having void filling properties. Examples of such an adhesive are mineral-filled epoxies, acrylics or urethanes that have been formulated to provide a maximum degree of their adhesive capabilities. The filling material may be cast or pressed in place in the slots and gaps and the outer surface shaped to form a smooth circular configuration. The permanent magnets may be fastened to the rotor stack by, in the instance where a cast metal or adhesive is used, temporarily clamping the molds to the ends of the rotor stack and to the permanent magnets. The molds, not shown in the drawings, may be designed to apply axial pressure on the rotor laminations, hold the magnets, properly space the magnets, and, of course, serve as molds during the filling operation when the material 44 is inserted. The molds may be designed to produce flush or smooth end surfaces of the rotor as shown in Fig. 4 or to produce lugs or fan blades at the ends of the rotor as will be described in connection with Figs. 11-16. The permanent magnets may also be secured to the outer surface 27 of the rotor stack by placing an adhesive between the surfaces 36 and 27. In some forms of the invention, this adhesive may be useful to hold the magnets in place while the previously described anchors are being formed in the gaps 41 and slots 31. A suitable adhesive, indicated by the numeral 46 between the surfaces 36 and 27 may be a structural non-gap filling adhesive, such as anaerobic acrylics, epoxies or urethanes.

After the formation of the stator and rotor, as described, these parts are mounted in a suitable frame, etc. in the conventional manner.

Figs. 5 and 6 show an alternate construction of the anchor between the rotor stack and the permanent magnets. The rotor stack is indicated by the numeral 51 and permanent magnets 52 and 53 are positioned on the outer surface 54 of the rotor stack 51. The anchor comprises inverted T-shaped slots 56 which may be located similarly to the slots 31 shown in Figs. 2-4. The side edges 57 of the magnets 52 and 53 are circumferentially spaced to form a gap 58, and the radially outer corners of the magnets are removed in order to provide a flared configuration as indicated by the numeral 59. The anchor further comprises one or more metal strips 61, each including a radially extending center part 62, inner tabs 63 and outer tabs 64. The strips 61 are made of an elastic or spring-like metal, and it is preferably a nonferrous metal. The center part 62 is positioned in the slots and gaps and extends axially of the rotor stack. The inner tabs 63 initially extend at essentially right angles to the center part 62, but they are deformed from the normal position, shown in dashed lines and indicated by the numeral 66 to the stressed positions 67 where they extend into the bottom 68 of the associated slots 56. Similarly, the outer tabs 64 overlie the beveled corners 59 of the permanent magnets and during assembly they are deformed from their normal positions shown in dashed lines and indicated by the numeral 71 to the stressed or assembled positions indicated by the solid lines. The radial length of the center part 62 is sized relatively to the depth of the slot 56 and the thickness of the permanent magnets so that the tabs 63 and 64 tightly engage the stack 51 and the magnets and hold the magnets anchored to the laminations. If desired, a filling material, as previously described, may be placed in the gap 58 and the slot 56 around the strip 61.

The end laminations of the rotor stack 51 and the ends of the permanent magnets may be held in place by bending the ends of the metal strips 61 to overlie these parts. If desired, an adhesive 46 and/or banding strips 28 may also be used to secure the parts together.

In the form of the invention shown in Fig. 7, two permanent magnets 72 and 73 are positioned on the outer periphery of a rotor stack 74, the magnets 72 and 73 forming a gap between their adjacent side edges 76. The laminations forming the stack 74 are formed with radially outwardly extending projections 78 which extend into the gap between the side edges of the magnets. The side edges and the projections are shaped to form an interlocking or dovetail arrangement, and this is accomplished in this instance by enlarging the outer end of the projection 78 and enlarging the inner end area 79 of the gap. The gap is filled with a filling material 81 which extends around the projection 78 and completely fills the gap. In addition to the interlocking or dovetail arrangement, it is preferred that the radially outer corners of the magnets be beveled as indicated by the numeral 82 to form a further interlock between the projection 78 and the magnets.

In the arrangement shown in Fig. 8, two permanent magnets 83 and 84 are secured to the outer surface of a rotor stack 86 by an anchor that includes an L-shaped slot 87 formed in the outer portion of the rotor stack. An L-shaped strip 88 is positioned in the slot 87 and extends radially outwardly into the gap between the side edges 89 of the permanent magnets. A filling material 91 is placed in the gap and extends around the strip 88. The filling material adheres to the side edges of the permanent magnets and to the strip 88 in order to anchor the magnets to the rotor stack.

It should be understood that in all of the forms of the invention, an adhesive may be placed between the outer periphery of the rotor stack and the inner surfaces of the magnets, as described in connection with Figs. 3 and 4. While Fig. 8 shows the side edges of the permanent magnets as having straight or radially extending sides, they may instead be flared, as previously discussed, to form a better interlock.

In the arrangement shown in Fig. 9, two magnets 92 and 93 are positioned on the outer periphery of a rotor stack 94 and form a gap between their side edges 96, as previously described. The anchor includes a radially outward projection 97 formed on the laminations of the stack 94, similar to the arrangement shown in Fig. 7. However, in the arrangement shown in Fig. 9, the projection 97 is straight and does not have an outer enlargement. A filling material 98, having adhesive qualities, fills the gap and extends around the projection 97 in order to anchor the magnets to the rotor stack. The radially outer corners 99 of the magnets may be beveled outwardly as shown by the dashed lines 101, they may slant inwardly as shown by the solid lines 102, or they may extend straight outwardly as shown in Fig. 8.

In the arrangement shown in Fig. 10, the anchor means also serves to hold the laminations of the rotor stack together. Two magnets, 103 and 104, are positioned on the outer periphery of a rotor stack 106, the magnets forming a gap therebetween. The laminations forming the stack 106 have notches or slots 107 formed in their outer peripheries, and these notches 107 may have a generally rectangular configuration. An axially extending strip 108, made, for example, of metal, extends the length of the stack 106 and is secured to the rotor laminations similar to the arrangement described in the previously mentioned Schaefer patent. The strip 108 is thicker than the radial depth of the notches 107 and therefore extends radially outwardly a short distance into the gap between the magnets 103 and 104. The gap is filled with a filling material 109 which adheres to the side edges of the magnets and extends around and adheres to the strip 108, thereby anchoring the magnets to the strip 108 and to the stack 106. The side edges 111 of the magnets are shown as having slanted or outwardly flared configurations, but, of course, other shapes could be formed.

In the construction shown in Figs. 11-13, a filling material between the permanent magnets is also utilized to hold the rotor laminations together and to form blades for circulating air in the motor. A rotor stack 121 of laminations has six axially extending circumferentially spaced slots 122 formed in its outer periphery, the slots 122 being similar to the slots 31 shown in Figs. 2-4. Figs. 11-13 illustrate a rotor wherein six permanent magnets 123 are fastened to the periphery of the stack 121. The sides of the magnets are adjacent the slots 122 and the corners of the magnets are chamfered as indicated at 124 in Fig. 12. Banding strips 126 may be provided to secure the laminations together, but it should be understood that the strips 126 may be unnecessary. The slots 122 and the spaces between the permanent magnets are filled by a filling material 127 which may, for example, be aluminum or an adhesive. The filling material 127 extends axially beyond both ends of the slots 122, as shown in Fig. 11, and forms fan blades 128. As shown in Figs. 11 and 13, the blades are preferably thickened at their bases 129 and overlie the end portions of the stack 121 and the magnets 123 and thereby secure the rotor parts together in the axial direction. The blades 128, of course, serve to circulate the air in the motor housing during motor operation. The blades 128 are formed by the shape of the molds used for casting or molding the filling material 127.

Figs. 14 and 15 show an arrangement similar to Figs. 11-13. Conical sprues 131 are formed at the ends of the rotor stack 132, and the sprues 131 overlie the end laminations and the ends of the permanent magnets 133. Banding strips may or may not be used. The sprues 131, as well as the blades 128, may also serve as balancing lugs, since they may be drilled into to remove weight and bring the rotor into balance.

Fig. 16 shows another rotor similar to Figs. 11-13. The lamination stack 141 has six permanent magnets 142 on its periphery, and six fan blades 143, similar to the blades 128, hold the parts together. In addition, six intermediate fan blades 144 are provided between the blades 143. Six additional slots, which may be similar to the slots 122, are formed in the rotor laminations at the locations where the banding strips 126 are shown in Fig. 12. Such strips are,

0143693

of course, eliminated in the construction shown in Fig. 16. The blades 144 overlie the endmost laminations and the ends of the magnets and serve as additional securing means and fan blades.

It will be apparent from the foregoing that a novel and useful rotor construction and method of making a rotor have been provided. The rotor utilizes parts which in the past have been discarded during the manufacture of the stator, and various anchoring arrangements are provided for securing permanent magnets to the outer periphery of a rotor stack formed from the pieces. The anchors include interlocking arrangements and may also include an adhesive between the adjoining surfaces of the rotor stack and the permanent magnets. Where a filling material is used, it perferably has adhesive qualities. While the description relates to four and six magnets and anchors, a greater or fewer number of poles may, of course, be provided. The anchors are also advantageous since they may be constructed to function as fan blades and balancing lugs.

0143693

CLAIMS

1. A permanent magnet rotor for an electric motor, comprising a cylindrical stack (21) of rotor laminations (22), a plurality of arcuate permanent magnets (32-35) positioned on the outer periphery of said stack (21), characterized in that said magnets are circumferentially spaced and said spacing results in gaps (41) between adjacent sides of said magnets, and further including anchor means (44) in said gaps and connected to said stack and to said magnets at said sides for securing said magnets to said stack.

2. Apparatus as in Claim 1, wherein said anchor means comprises a slot (31) formed in said stack (21) adjacent each of said gaps (41), each slot (31) generally underlying the associated gap, and means (44) extending into each associated slot and gap and interconnecting said stack with said side edges.

3. Apparatus as in Claim 2, wherein said last named means comprises a filling material.

4. Apparatus as in Claim 3, wherein said filling material comprises a cast nonferrous metal.

5. Apparatus as in Claim 3, wherein said filling material comprises a structural adhesive having void filling properties.

6. Apparatus as in Claim 2, wherein said last named means comprises a metal strip (61) extending into said slot and said gap.

0143693

7. Apparatus as in Claim 6, wherein said last named means further comprises a filling material in said gap.

8. Apparatus as in Claim 6, wherein said metal strip includes a plurality of circumferentially extending elastic tabs (63, 64) which interlock with said magnets and with said stack.

9. Apparatus as in Claim 6, wherein said metal strip further secures together said laminations.

10. Apparatus as in Claim 2, wherein the radially outer corners of said side edges flare radially and circumferentially.

11. Apparatus as in Claim 1, wherein said anchor means comprises a projection (78, 97) formed on said stack adjacent each of said gaps, each projection extending radially outwardly into the associated gap.

12. Apparatus as in Claim 11, wherein said anchor means further comprises filling material (81, 98) in each gap around said projection and against said side edges.

13. Apparatus as in Claim 12, wherein said filling material comprises a structural adhesive having void filling properties.

14. Apparatus as in Claim 12, wherein said filling material comprises a cast nonferrous metal.

15. Apparatus as in Claim 11, wherein said projection is circumferentially enlarged adjacent its radially outer end.

16. Apparatus as in Claim 1, and further including an adhesive between the outer surface of said stack and the inner surfaces of said magnets.

0143693

17.  Apparatus as in Claim 3, wherein said filling material extends axially out of the ends of said slots and overlies the endmost laminations.

18.  Apparatus as in Claim 17, wherein said axially extended filling material further comprises a fan blade 128.

19.  Apparatus as in Claim 17, wherein said filling material further overlies the ends of said permanent magnets.

20.  A method of making a motor having a stator and a rotor, comprising the steps of forming a stack (10) of stator laminations by shaping individual stator laminations from a sheet or strip of lamination material and securing said stator laminations together in a stack (10), said shaping of each stator lamination resulting in a centerpiece (13) that is removed to form a rotor cavity (12), characterized by the steps of shaping each centerpiece (13) to produce a rotor lamination (22), arranging said rotor laminations (22) to form a stack (21), and securing permanent magnets (32-35) to said stack of rotor laminations.

21.  The method of Claim 20, wherein said centerpieces and said rotor laminations are formed by at least one stamping operation.

22.  The method of Claim 20, wherein said magnets are arranged at circumferentially spaced locations to form gaps therebetween, and said magnets are secured to said rotor stack by the step of casting a filling material (44) in said gaps.

0143693

23.  The method of Claim 20, wherein said step of shaping
said centerpieces and securing said magnets to said rotor
stack includes forming anchor means between said rotor
stack and said magnets.

FIG-1.

FIG-2.

FIG-3.

FIG-4.

FIG_5_

FIG_6_

FIG_7_

FIG_8_

FIG_9_

FIG_10_

0143693

_FIG_ _11_

_FIG_ _12_

_FIG_ _13_

_FIG_ _16_

_FIG_ _14_

_FIG_ _15_